# EUROPÄISCHE PATENTSCHRIFT

(11) **EP 1 061 303 B1**
(45) Veröffentlichungstag und Bekanntmachung des Hinweises auf die Patenterteilung: **10.03.2004**
(21) Anmeldenummer: 00250181.5
(22) Anmeldetag: 09.06.2000
(51) Int. Cl.: F16L 5/02, F16L 3/14, F16L 55/033

(54) **Rohrschelle**
Pipe clamp
Collier de serrage

(30) Priorität: 14.06.1999 DE 19926952
(43) Veröffentlichungstag der Anmeldung: 20.12.2000
(73) Patentinhaber: WOCO Industrietechnik GmbH, 63628 Bad-Soden Salmünster (DE)
(72) Erfinder: Wolf, Franz Josef, 63628 Bad Soden-Salmünster (DE); Möller, Ralf, 36381 Schlüchtern (DE)
(74) Vertreter: Weber-Bruls, Dorothée, Dr.

(56) Entgegenhaltungen:
- EP-A- 0 713 039
- DE-C- 19 842 739
- DE-U- 29 515 357

## Beschreibung

Die Erfindung betrifft eine Rohrschelle zur ortsfesten Fixierung von Rohrleitungen, insbesondere zur Wandbefestigung oder zur Deckenbefestigung von Rohrleitungen in Gebäuden, der im Oberbegriff des Patentanspruchs 1 genannten Art.

Eine solche ortsfeste Fixierung erfolgt nach dem landläufigen Stand der Technik mit einer spannbaren, das zu fixierende Rohr der Rohrleitung umgreifenden Schelle und mit Befestigungsmitteln zum Fixieren der Schelle an einer Tragkonstruktion, insbesondere also an einer Wand oder an einer Decke eines Gebäudes.

Der Entkopplung solcher Rohrleitungen von der Tragkonstruktion sowie speziell der Isolation des durch diese Rohrleitungen geleiteten Körperschalls kommt insbesondere im Hochbau eine wachsende Bedeutung zu.

Zu diesem Zweck ist nach dem landläufigen Stand der Technik in der Regel zwischen der das Rohr fixierenden und umgreifenden Schelle und dem Rohr selbst ein Elastomerkörper eingefügt. Um das Rohr mit einer solchen Rohrschelle mit Elastomerzwischenlage ausreichend fixieren zu können, sind zumeist recht hohe Vorspannungen des Elastomerkörpers erforderlich. Da jedoch mit zunehmender Vorspannung eines Elastomers auch dessen Körperschallleitfähigkeit zunimmt, sind bei solcher Art Befestigungen zwangsläufig nur geringe Bedämpfungen, insbesondere Bedämpfungen der Körperschallleitung, möglich.

Zur Minderung dieses Effekts ist aus der europäischen Offenlegungsschrift EP 612 945 A1 eine Rohrschelle der zuvor beschriebenen Art bekannt, bei der die Zwischenlage als Schale ausgebildet ist, deren Länge um ein Mehrfaches größer als die Breite der Rohrschelle selbst ist. Dadurch kann zwar die Körperschallübertragung aus dem Rohr über die Schelle in die Tragkonstruktion hinein nicht beeinflußt werden, wird jedoch versucht, durch eine Bedämpfung des im Rohr geführten Körperschalls zu beiden axialen Seiten der Schelle diesen Körperschall an der Übertragungsstelle, nämlich der Schelle, bereits bedämpft einlaufen zu lassen. Dabei hat sich jedoch gezeigt, daß für den so erzielbaren Wirkungsgrad der erforderliche Aufwand und die erhöhte Anfälligkeit des Systems zu hoch sind.

Ein gleicher Versuch, wenn auch in kinematischer Umkehr, den Übergang eines im zu fixierenden Rohr geführten Körperschalls auf die Tragkonstruktion zu dämpfen, ist aus der europäischen Offenlegungsschrift EP 0 582 354 A1 bekannt. Die nach diesem Stand der Technik offenbarte Rohrschelle ist speziell für senkrecht verlaufende Rohrleitungen bestimmt. Dort wird die zu fixierende Rohrleitung von einer in einer tragenden Wand mit einem Schraubbolzen fixierten Rohrschelle mit einer Elastomereinlage umgriffen. Dabei ist jedoch das zu fixierende Rohr in dieser Rohrschelle nicht eingespannt, sondern axial verschiebbar gehaltert. Um ein Durchrutschen der gesamten Rohrleitung bzw. des zu fixierenden Rohrabschnitts bei dieser Art der Wandbefestigung zu verhindern, ist unmittelbar oberhalb der mit der Wand verbundenen Schelle eine weitgehend identische Schelle angebracht, die axial unverschiebbar und nicht drehbar, jedoch ohne Wandbefestigung auf dem Rohrmantel fixiert ist, und zwar ebenfalls unter Zwischenlage eines Elastomerkörpers. Beide Schellen, also sowohl die an der Wand befestigte Schelle als auch die nur auf dem Rohr befestigte Schelle, sind jeweils mit einem Elastomerkörper bestückt, der zumindest in der zur zugeordneten zweiten Schelle weisenden axialen Richtung mit einer Elastomerringwulst versehen sind. Bei montierter Rohrleitung kann sich so der vertikal fixierende Elastomerring der oberen Schelle auf dem gegenüberliegenden Elastomerring der an der Wand befestigten Schelle federnd abstützen. Bei dieser Anordnung braucht zwar der in der wandfixierten Schelle angeordnete Elastomerkörper nicht in dem Maße vorgespannt zu werden, wie dies für die nur mit einer Schelle die Rohrleitung an einer Tragkonstruktion fixierenden Schelle erforderlich ist. Dennoch bleibt der Körperschallweg aus dem Rohr über die nicht an der Wand fixierten fest verspannten Schelle und über die ebenfalls unter Druckspannung stehenden und aufeinanderliegenden Kragen in den Metallring der wandfixierten Schelle und über den Schraubbolzen schließlich in die Wand bzw. in die Tragkonstruktion hinein. Gegenüber den Fixierungen von Rohrleitungen mit einer unmittelbaren Wandbefestigung der Schelle wird zwar eine gewisse Dämpfung des durchlaufenden Schalls ermöglicht, jedoch vermag das Ausmaß der erzielbaren Dämpfung nicht die hohen Anforderungen zu erfüllen, die der moderne Hochbau an die Schalldämpfung jeglicher Art in Gebäuden stellt.

Ausgehend von diesem exemplarischen Stand der Technik stellt sich der vorliegenden Erfindung das technische Problem, Rohrleitungen mit einer einzigen Schelle je Anbindungspunkt so an einer Tragkonstruktion, insbesondere also Wand oder Decke eines Gebäudes, zu fixieren, daß eine weitgehende Schwingungsentkopplung und eine überlegene akustische Übertragungsdämpfung erzielt wird.

Die Erfindung löst diese Aufgabe durch eine Rohrschelle, die die im Patentanspruch 1 genannten Merkmale aufweist, und insbesondere nach dem im Patentanspruch 10 beschriebenen Verfahren zweckmäßig und kostengünstig herstellbar sowie im Einsatzort einfach und ohne Aufwand montierbar ist.

Die Unteransprüche 2 bis 9 haben Ausgestaltungen der Erfindung zum Gegenstand, die Optimierungen der Rohrschelle sowohl im Hinblick auf die technischen Kenndaten als auch in fertigungstechnischer Hinsicht ermöglichen.

Das konstruktiv wesentliche Merkmal der Rohrschelle der Erfindung ist dementsprechend darin zu sehen, daß das Rohr in der umgreifenden Schelle unverrückbar und unverschiebbar fest eingespannt und fixiert ist, während die Entkopplung des in dem Rohr geführten Körperschalls zwischen der das Rohr umgreifenden Schelle und dem diese tragenden Befestigungsmittel, das die Schelle an der Tragkonstruktion verankert, erfolgt.

Es ist ersichtlich, daß der Fachmann diese Entkopplung zwischen der umgreifenden Schelle und dem Befestigungsmittel nach Maßgabe der unterschiedlichen Anwendungen recht unterschiedlich konfigurieren und dimensionieren kann. So werden für schwere und große Rohrleitungen andere Konstruktionen möglich und gegebenenfalls andere Kompromisse und Optimierungen erforderlich sein als für leichte und dünne Rohrleitungen. Solche Ausgestaltungen werden jedoch stets dann von der vorliegenden Erfindung Gebrauch machen, wenn sie ganz allgemein Dämpfungsmittel, speziell eine Entkopplung, zwischen der das Rohr umspannenden und das Rohr fixierenden Schelle und dem Befestigungsmittel angeordnet sind, mit dem diese das Rohr fixierende Schelle an der Tragkonstruktion, speziell also an einer Wand oder einer Decke eines Gebäudes, befestigt sind.

Die Erfindung ist im folgenden anhand eines Ausführungsbeispiels in Verbindung mit den Zeichnungen näher erläutert. Dabei zeigen:
- Fig. 1: in perspektivischer Darstellung, teilweise im Schnitt, eine Teildarstellung einer Rohrschelle mit den Merkmalen der Erfindung;
- Fig. 2: bezogen auf die Längsachse des Befestigungsmittels, im Axialschnitt eine Teildarstellung der Verbindung zwischen dem Elastomerkörper und der Schelle;
- Fig. 3: in perspektivischer Darstellung und teilweise im Schnitt den Elastomerkörper des in den Fig. 1 und 2 gezeigten Ausführungsbeispiels der Rohrschelle;
- Fig. 4: Einzelheiten der das nicht dargestellte Rohr fixierend umspannenden Schelle und
- Fig. 5: in perspektivischer Darstellung und im Teilschnitt ähnlich der Darstellung der Fig. 1 ein zweites Ausführungsbeispiel der Rohrschelle mit den Merkmalen der Erfindung.

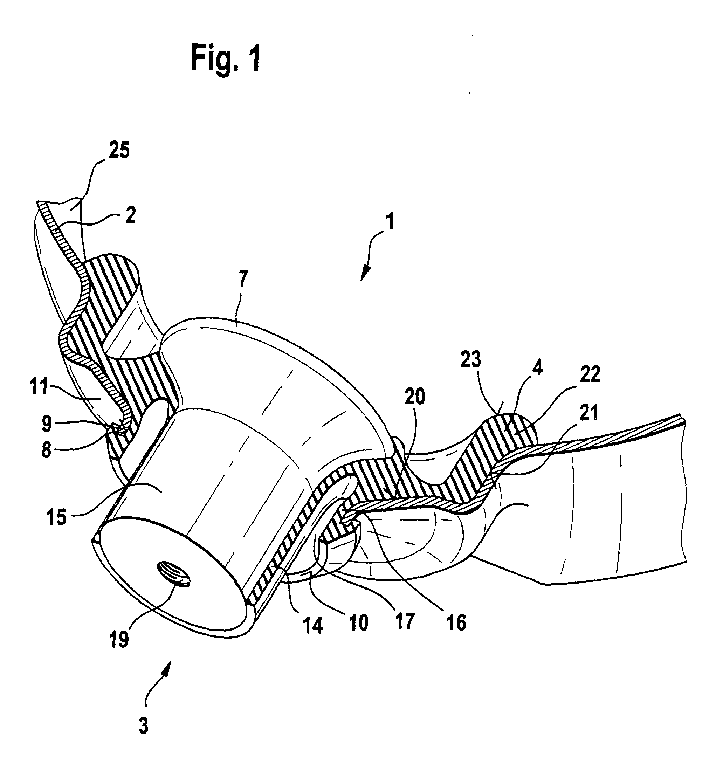

Die in der Fig. 1 gezeigte Rohrschelle 1 besteht aus drei Teilen, nämlich der das nicht dargestellte zu fixierende Rohr umgreifenden Schelle 2, dem Befestigungsmittel 3 und dem Elastomerkörper 4, der sowohl mit dem Befestigungsmittel als auch mit der Schelle so verbunden ist, daß das Befestigungsmittel 3 und die Schelle 2 unter bestimmungsgemäßen Einsatzbedingungen stets voneinander beabstandet und in allen drei Raumrichtungen frei gegeneinander schwingfähig gehalten sind.

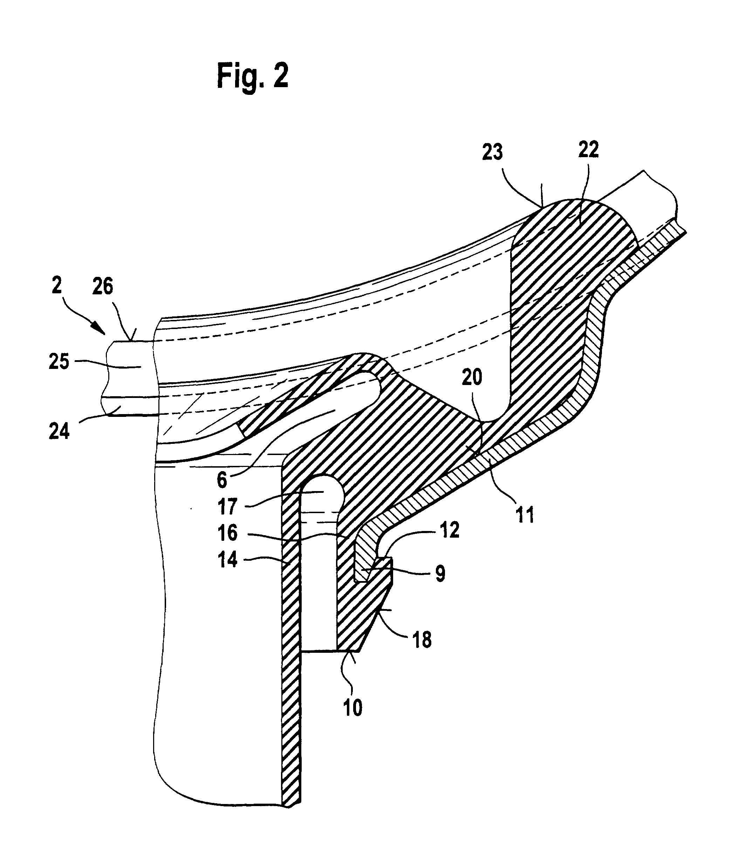

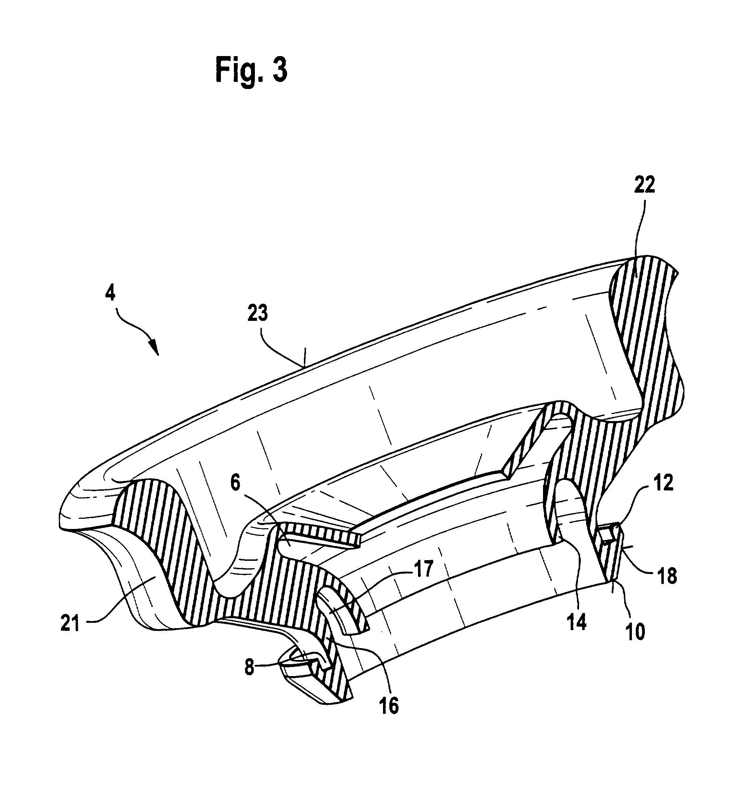

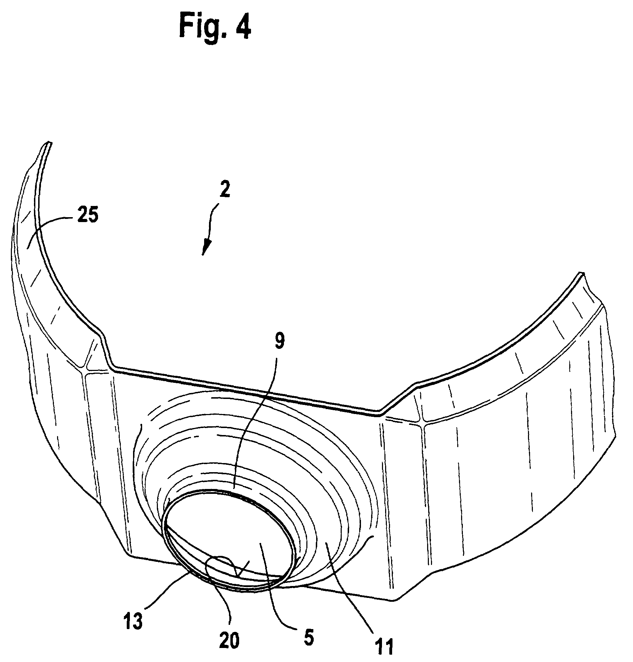

Der Elastomerkörper 4, der in den Fig. 2 und 3 in zwei verschiedenen Ansichten in etwas vergrößerter Darstellung wiedergegeben ist, weist im großen und ganzen die Form einer stark profilierten Scheibe, die in dem in Fig. 1 gezeigten Zusammenbau der Rohrschelle 1 einen am besten aus Fig. 4 ersichtlichen Durchbruch 5 verschließend überdeckt. Dabei weist der nach Art einer Profilscheibe ausgebildete Elastomerkörper 4 zentral eine Aufnahmetasche 6 für ein an dem Befestigungsmittel 3 ausgebildetes Koppelelement 7 und eine peripher ausgebildete Aufnahmetasche 8 für ein an der Schelle 2 ausgebildetes Koppelelement 9 auf.

In der Darstellung der Fig. 1 ist das Befestigungsmittel 3 in etwas schematisierender Weise als Kragenhülse 3,7 dargestellt, die gewissermaßen die Funktion eines Distanzstückes zwischen der Schelle 2 und der in Fig. 1 nicht dargestellten Wand oder Tragfunktion erfüllt. Ebenfalls nicht dargestellt ist in der Fig. 1 ein Schraubbolzen, der entweder in die Kragenhülse 3,7 unmittelbar eingeschraubt oder durch diese hindurchgreifend von der Kragenseite her mit einer Mutter verschraubt ist. Gleicherweise kann das Befestigungsmittel 3,7 in der in Fig. 1 dargestellten schematischen Weise auch unmittelbar als Kopf eines Befestigungsbolzens, insbesondere eines Gewindebolzens, ausgebildet sein. Entscheidend ist lediglich, daß der mit dem Elastomerkörper 4 zusammenwirkende Abschnitt der Befestigungsmittel mit einem hier als Kragen 7 dargestellten Koppelelement ausgestaltet ist, das einen mechanisch festen Verbund zum Elastomerkörper herzustellen vermag.

Im Rahmen des hier beschriebenen Ausführungsbeispiels der Rohrschelle ist das Koppelelement als Kragen 7 einer Kragenhülse 3,7 ausgebildet, der in eine zentrale Aufnahmetasche hinterschneidend eingeclipst ist. Da die Aufnahmetasche 6 das Koppelelement 7 des Befestigungsmittels 3 ringförmig und randseitig vollständig umfassend umschließt und zudem in der insbesondere aus Fig. 3 gut ersichtlichen Weise eine kegelförmige Kontur aufweist, wird bereits durch diese Art des Einknüpfverbundes eine ausreichend feste Verbindung zwischen dem Befestigungsmittel 3 und dem Elastomerkörper 4 erreicht. Für Fälle, in denen diese Art der mechanischen Hinterschnittverbindung nicht ausreicht, können zusätzlich Haftvermittler und Klebstoffe verwendet werden oder kann das Befestigungsmittel 3 beim Ausvulkanisieren des Elastomerkörpers 4 als Einlegeteil in der Gummispritzgießform unmittelbar in den Elastomerkörper 4 einvulkanisiert werden.

Der Elastomerkörper 4 weist weiterhin schwingungstechnisch isoliert von der zentralen Aufnahmetasche 6 eine periphere Aufnahmetasche 8 auf, die der Aufnahme eines an der Schelle 2 ausgebildeten Koppelelements 9 dient.

In der aus den Fig. 1 und 4 ersichtlichen Weise ist dieses Koppelelement der Schelle als zylindrischer Ring ausgebildet, der mit seinem kleinsten inneren Rand gleichzeitig die lichte Weite des Durchbruchs 5 in der Schelle 2 definiert.

Bei dieser Ausgestaltung des Koppelelements 9 der Schelle 2 und der peripheren Aufnahmetasche 8 des Elastomerkörpers 4 kann der in der Fig. 1 gezeigte Zusammenbau der Rohrschelle 1 am einfachsten derart erfolgen, daß nach vorangegangenem, insbesondere herstellerseitig erfolgtem Einbringen des Koppelelements 7 des Befestigungsmittels 3 in die zentrale Aufnahmetasche 6 des Elastomerkörpers 4 diese vormontierte Unterbaugruppe dann, bezogen auf die Konfiguration der Schelle 2, mehr oder minder frei, mit dem Befestigungsmittel 3 voran, in radialer Richtung von innen nach außen durch den Durchbruch 5 in der Schelle 2 hindurchgeführt wird, und zwar so lange, bis, bezogen auf die Konfiguration der Kragenhülse 3,7, der axial zur Tragkonstruktion weisende untere periphere Rand 10 des Elastomerkörpers 4 auf der die Durchbrechung 5 unmittelbar umgebenden Innenwandfläche 11 der Schelle 2 aufsitzt. In diesem Stadium des in radialer Richtung der Schelle und in axialer Richtung des Befestigungsmittels erfolgenden Durchschiebens des vormontierten Teils durch die Schellenwand hindurch muß dann gegen einen konstruktiv variablen, vorzugsweise aber nicht allzu hoch eingestellten elastischen Gegendruck die Unterbaugruppe 3,4 durch den Durchbruch 5 vollends hindurchgedrückt werden, bis die schellenseitige Ringkante 12 nach radial auswärts entspannend hervorspringt, um dann nach einem kurzen Zug oder Schub der Unterbaugruppe 3,4 in Richtung auf das Schelleninnere in der peripheren Aufnahmetasche 8 paßgenau aufgenommen zu werden (Fig. 1).

In aller Regel wird die Verbindung als reine Schnappverbindung auch ohne Hilfsmittel ausreichend fest sein, um die Rohrschelle kardanisch am Elastomerkörper 4 anzukoppeln. Ein Verkleben, Verklemmen oder beliebige andere Maßnahmen zur stabileren Fixierung des Koppelelements 9 in der peripheren Aufnahmetasche 8 sind dabei ohne weiteres denkbar und durchführbar, ohne in der Praxis jedoch in aller Regel wirklich erforderlich zu sein.

Das beschriebene Hindurchdrücken oder Hindurchziehen der Unterbaugruppe aus dem Befestigungsmittel 3 mit dem Kragen 7 und dem Elastomerkörper 4 läßt sich dadurch sowohl hinsichtlich eines Zentriervorganges als auch zur Einleitung der Verformungen am Elastomerkörper 4 erleichtern, daß der den Durchbruch 5 an der Schelle 2 umgebende Randflächenbereich 11, gestuft oder ungestuft, im großen und ganzen trichterförmig (Fig. 4) ausgebildet ist.

In der aus den Fig. 1 bis 3 ersichtlichen Weise ist bei dem hier erläuterten Ausführungsbeispiel des Elastomerkörpers 4 als Schürze oder Tasche in Fortsetzung der zentralen Aufnahmetasche 6 am Elastomerkörper 4 eine vergleichsweise dünne Manschette 14 angeformt, die unter radialer Vorspannung den zylindrischen Hülsenabschnitt 15 stabilisierend und weiter fixierend umspannt. Zwischen der Manschette 14 und einer Schürze 16 ist eine tiefe ohne Unterbrechung umlaufende Ringnut 17 im Elastomerkörper 4 ausgebildet, die primär dem Zweck dient, das Befestigungsmittel 3 mit der diesen umspannenden Manschette 14 des Elastomerkörpers 4 von der Schelle, insbesondere jedoch vom Rand des Durchbruchs 5 schwingungstechnisch abzukoppeln. Dabei bestimmt die Breite der Ringnut zwischen Manschette 14 und Schürze 16 den maximalen kardanischen Freigang der Schelle 2 gegenüber dem Befestigungsmittel 3.

Die Ringnut 17 im Elastomerkörper 4 dient gleichzeitig bei dem oben beschriebenen Vorgang des Zusammenbauens der Rohrschelle 1 der leichteren Nachgiebigkeit und Verformbarkeit der Schürze 16, die die periphere Aufnahmetasche 8 trägt. Statt einer Materialverpressung beim Hindurchzwingen des außenliegenden Abschnitts des Elastomerkörpers 4 durch den Durchbruch 5 der Schelle 2 hindurch müssen erheblich größere Kräfte aufgewendet werden als bei einem auch noch von Hand möglichen Hindurchdrücken der die Aufnahmetasche 8 tragenden Schürze 16 durch die Öffnung in der Schelle 2 hindurch.

Dieser Vorgang des den Zusammenbau der Rohrschelle 1 abschließenden Hindurchdrückens der vormontierten Unterbaugruppe 3,4 durch den Rand 13 des Durchbruchs 5 hindurch kann schließlich auch dadurch weiter erleichtert werden, daß der in Vorschubrichtung vorne liegende Randbereich 10 der Schürze 16 mit einer konischen Einführungs-Schrägfläche 18 versehen ist.

Ein besonders einfacher Montagegang kann dabei beispielsweise so aussehen, daß zunächst ein in den Figuren nicht dargestellter Schraubbolzen in und mit der Tragkonstruktion verankert wird. Das Befestigungsmittel 3 ist als Gewindehülse ausgebildet mit einem Innengewinde 19, das zunächst fest auf die Tragkonstruktion aufgeschraubt wird. Vorzugsweise wird dabei die Unterkombination 3,4 zum Verschrauben auf dem in der Tragkonstruktion befestigten Schraubbolzen aufgeschraubt. Dabei hängt die Schelle 2, die noch nicht in der peripheren Aufnahmetasche 8 aufgenommen ist, lose und frei drehbar und verschiebbar über der Schraubhülse 3.

Zum Aufschrauben der Gewindehülse 3 auf den vormontierten Schraubbolzen kann beispielsweise der in den Figuren nicht dargestellte Kopf mit einem Inbuseinsatz versehen sein.

Zur Fertigmontage der solcherart vormontierten Rohschelle 1 braucht dann lediglich noch die Schelle 2 gegriffen und auf den Kragen 7 der Gewindehülse 3 gezogen zu werden. Nach dem Hervorspringen der Aufnahmetasche 8 hinter dem Rand 13 des Durchbruchs 5 braucht die Schelle dann nur noch kurz in entgegengesetzter Richtung, also wandwärts, verschoben zu werden, um die Koppelelemente 9 der Schelle 2 ausreichend fest in der Aufnahmetasche 8 zu fixieren. Sowohl für den vorstehend beschriebenen Montagevorgang als auch aus Brandschutzgründen ist der größte Außendurchmesser des Kragens 7 der Kragenhülse 3,7 ausreichend größer als der lichte Innendurchmesser am Rand 13 des Durchbruchs 5 in der Schelle 2. Dadurch wird die Schelle vom Befestigungsmittel selbst beim Ausbrennen des gesamten Elastomerkörpers unverlierbar und verhindert so ein simples Abfallen der Rohrleitungen von den Wänden.

Während die periphere Aufnahmetasche 8 und das Koppelelement 9 der Schelle 2 verhindern, daß die Schelle 2 allzu weit in Richtung auf die Tragkonstruktion zu bzw. das Befestigungsmittel 3 allzu weit in die Schelle hineingedrückt werden können, werden in entgegengesetzter Richtung wirkende Kräfte, also ein Herausdrücken des Befestigungsmittels 3 aus dem Schelleninneren bzw. ein übermäßiges Ziehen der Schelle in Richtung des Kragens 7 der Kragenhülse 3,7 dadurch verhindert, daß der größte Durchmesser des hier profilscheibenartig ausgebildeten Elastomerkörpers 4 wesentlich größer als der größte lichte Innendurchmesser des Durchbruchs 5 der Schelle 2 ist. Vorzugsweise ist dieser größte Außendurchmesser des Elastomerkörpers 4 zumindest doppelt so groß wie die größte lichte Weite des Durchbruchs 5 in der Schelle 2. Dabei sind die Innenfläche 20 der Schelle 2 im Auflagebereich des Elastomerkörpers 4 und die Auflagefläche 21 des Elastomerkörpers 4 formkomplementär zueinander konfiguriert, so daß der Elastomerkörper 4 vollflächig auf die wie auch immer konfigurierten Innenfläche der Schelle 2 aufliegt. Durch diese geometrische Konfiguration des Elastomerkörpers 4 werden beide Bauteile vollkommen ausreichend gegen ein Hindurchziehen oder Hindurchrutschen des scheibenförmigen Elastomerkörpers 4 durch den Durchbruch 5 in der Schelle 2 hindurch geschützt.

Es entspricht einer Ausgestaltung der Erfindung, daß dieser Fixierung des Elastomerkörpers 4 in seiner Lage in der Schelle 2 ein Wulstring 22 dient, der als periphere Begrenzung des Elastomerkörpers 4 ausgebildet und so konfiguriert ist, daß er radial in die Schelle 2 hinein vorspringt. Dieser Wulstring ist so dimensioniert, daß seine radial innerste Ringfläche 23 auf einem Kreis liegt, dessen Radius kleiner als der Radius des koplanaren und koaxialen Kreises ist, der dem Außendurchmesser eines bestimmungsgemäß in der Schelle 2 fixierten und in den Figuren nicht dargestellten Rohres ist. Diese Konfiguration und Dimensionierung des Wulstringes sind am besten aus der Fig. 2 ersichtlich. Die Schelle 2 besteht aus einem flachen Metallband 24 mit beidseitig aufgekröpften Zargen 25. In der Darstellung ist außerdem die trichterförmige Vertiefung 11 im Bereich des Durchbruchs 5 (Fig. 4) der Schelle 2 zu sehen. Der Durchmesser des Innenrandes 26 der Zarge 25 ist vor dem Einspannen des zu fixierenden Rohres geringfügig kleiner als der Außendurchmesser dieses Rohres. Beim Schließen und Verspannen der Schelle 2 krallt sich dadurch die Ringkante 26 unter axialem Aufspreitzen auf der Oberfläche des zu fixierenden Rohres fest. Dies bedeutet, daß die Ringkante 26 der Schellenzarge 25 dann einen Durchmesser aufweist, der gleich dem Außendurchmesser des zu fixierenden Rohres ist. Dieser Durchmesser ist geringfügig größer als der in Fig. 2 gezeigte Durchmesser der Ringkante 26 der Schellenzarge 25 im weitgehend unverspannten Zustand.

Bei dieser Konfiguration liegt die radial innerste Ringfläche 23 der Ringwulst 22, bezogen auf die Radialebene der Schelle 2, auf einem Kreis, dessen Radius also geringfügig kleiner als der Radius des koplanaren und koaxialen Kreises ist, der dem Außendurchmesser eines bestimmungsgemäß in der Schelle 2 der Rohrschelle 1 fixierten Rohres ist. Der Wulstring 22 wird also beim Fixieren des Rohres geringfügig verpreßt. Diese Verpressung ist dabei so ausgelegt, daß sie einerseits groß genug ist, um den Elastomerkörper 4 insgesamt in seiner Anbindung an die Innenwandfläche 20 der Schelle zu sichern, andererseits aber so klein wie möglich gehalten, um eine Körperschallübertragung von der Rohrwand in den Elastomerkörper hinein so gering wie möglich zu halten.

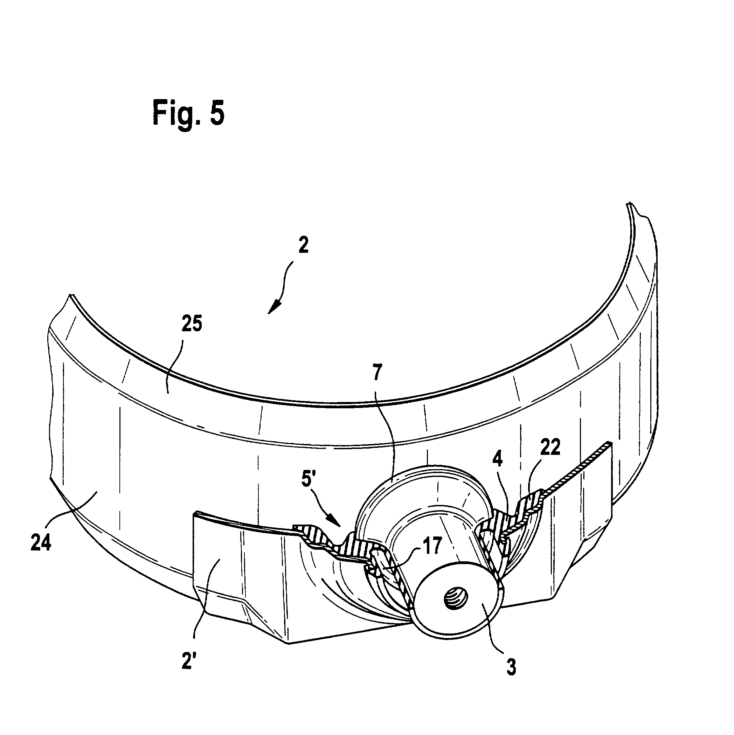

Während in dem in den Fig. 1 und 4 dargestellten Ausführungsbeispiel der Durchbruch 5 im Schellenband selbst ausgebildet ist, kann nach der in Fig. 5 gezeigten Variante des in den Fig. 1 bis 4 dargestellten Ausführungsbeispiels der Erfindung der Durchbruch 5' auch in einem an die eigentliche Schelle 2 angesetzten Schellenhalter 2' ausgebildet sein, der beispielsweise, wie in der Ausgestaltung gemäß Fig. 5 gezeigt, wie die Schelle 2 aus Stahlblech besteht und durch Punktschweißen mit dieser verbunden ist. In diesem Schellenhalter 2' sind dabei nicht nur der Durchbruch 5' sondern auch die anderen Stabilisierungs- und Entkopplungskomponenten in gleicher Weise ausgebildet, wie dies zuvor für das in den Fig. 1 bis 4 gezeigte Ausführungsbeispiel ausführlich erläutert wurde. Die in Fig. 5 gezeigte Ausgestaltung der Erfindung zeigt exakt dasselbe Kenndatenfeld wie die Ausgestaltung, bei der der Durchbruch 5 unmittelbar im Band der Schelle 2 vorgesehen ist. Der Vorteil, den die in Fig. 5 gezeigte Ausgestaltung ermöglicht, ohne daß der Rahmen und die Grundidee der Erfindung verlassen werden, liegt darin, daß das vormontierte Befestigungsmittel 3 sowohl vor als auch nach der Montage weder durch Sabotage noch gegebenenfalls im Brandfall, verlierbar ist, da das Koppelelement 7 des Befestigungselemente 3 weder durch die im Radius kleinere Durchbrechung 5', noch durch das verschlossene Band der Schelle 2 in die Schelle hinein hindurchtreten kann. Zudem ist durch die Vormontage des Schellenhalters 2' mit dem Elastomerkörper 4 und dem Befestigungsmittel 3 in besonders einfacher Weise eine Verwendung dieses entkoppelnden Befestigungssystems für die verschiedensten Schellendurchmesser und damit Rohrdurchmesser möglich, ohne daß eine ganze Typenserie von isolierten Befestigungsmitteln, welcher Konstruktion auch immer, vorgehalten werden muß. Dabei ist insbesondere dieser Vorteil selbstverständlich auch für die in den Fig. 1 bis 4 gezeigte Ausgestaltung der Erfindung mit dem Durchbruch 5 im Band der Schelle 2 selbst, realisierbar.

Für den Fall, daß abweichend von der in Fig. 5 gezeigten Ausgestaltung der Erfindung bei der Montage vor Ort zunächst das bereits fertiggestellte und entkoppelte Befestigungselement mit einem Schellenhalter an der Tragkonstruktion befestigt und erst dann mit der Schelle 2 verbunden werden soll, sind statt des bereits herstellerseitig zuvor erfolgten Anschweißens des Schellenhalters 2' an der Schelle 2 andere formschlüssige Verbindungskonstruktionen ohne weiteres an dieser Stelle verwendbar, so beispielsweise ein Verriegeln, ein Einrasten oder ein nachträgliches Verschrauben, wenn dies die Einsatzbedingungen erfordern.

## Patentansprüche

1. Rohrschelle (1) zur ortsfesten Fixierung von Rohrleitungen, insbesondere zur Wandbefestigung oder Deckenbefestigung von Rohrleitungen in Gebäuden, mit einer spannbaren, das zu fixierende Rohr umgreifenden Schelle (2), und mit Befestigungsmitteln (3) zum Fixieren der Schelle (2) an einer Tragkonstruktion, insbesondere an einer Wand oder Decke eines Gebäudes,
**gekennzeichnet durch**
einen Elastomerkörper (4), der sowohl mit dem Befestigungsmittel (3) als auch mit der Schelle (2) so verbunden ist, dass das Befestigungsmittel und die Schelle unter den bestimmungsgemässen Einsatzbedingungen stets voneinander beabstandet und in allen drei Raumrichtungen frei gegeneinander schwingfähig gehalten sind.

2. Rohrschelle (1) nach Anspruch 1,
**gekennzeichnet durch**
eine profilscheibenartige Konfiguration des Elastomerkörpers (4) mit einer am Elastomerkörper ausgebildeten zentralen Aufnahmetasche (6) für ein am Befestigungsmittel (3) ausgebildetes Koppelelement (7) und mit einer peripheren Aufnahmetasche (8) für ein an der Schelle (2) derart ausgebildetes Koppelelement (9), dass der montierte Elastomerkörper (4) einen Durchbruch (5) in Schelle (2) oder einen Durchbruch (5') in einem Ansatzstück (2') an der Scholle (2) für den Anschluss oder den Durchgriff des Befestigungsmittels (3) überdeckt.

3. Rohrschelle (1) nach Anspruch 2,
**gekennzeichnet durch**
ein Befestigungsmittel (3) mit einer Kragenhülse (3, 7) als Distanzstück, deren Kragen (7) in der zentralen Aufnahmetasche (6) des Elastomerkörpers (4) aufgenommen ist, der bei zusammengefügter Rohrschelle (1) innerhalb der Schelle (2) oder zumindest innerhalb des an der Schelle (2) befestigten Ansatzstücks (2') liegt, und deren grösster Durchmesser grösser als die grösste lichte Weite des Durchbruchs (5; 5') in der Schelle (2) oder dem Ansatzstück (2') ist.

4. Rohrschelle (1) nach Anspruch 3,
**dadurch gekennzeichnet, dass**
die Kragenhülse (3,7) mit einem Innengewinde (19), zur Aufnahme eines in der Tragkonstruktion befestigten Schraubbolzens, vorgesehen ist.

5. Rohrschelle (1) nach einem der Ansprüche 2 bis 4,
**gekennzeichnet durch**
einen grössten Aussendurchmesser des Elastomerkörpers (4), der zumindest doppelt so gross ist wie die grösste lichte Weite (13) des Durchbruchs (5; 5') in oder an der Schelle (2), wobei der auf der Innenfläche der Schelle (2) aufliegende Flächenbereich (21) des Elastomerkörpers (4) formkomplementär zur Schelleninnenfläche (20) im Auflagebereich konfiguriert ist.

6. Rohrschelle (1) nach einem der Ansprüche 2 bis 5,
**gekennzeichnet durch**
einen am Elastomerkörper (4) ausgebildeten peripheren Wulstring (22), der, auf die Schelle (2) bezogen, radial in den Schellenring hinein vorspringt oder, im Falle des Ansatzstückes (2'), zur Aussenwand der Schelle (2) hin vorspringt, und dabei mit seiner radial innersten Ringfläche (23) in der Radialebene der Schelle auf einem Kreis liegt, dessen Radius kleiner als der Radius des koplanaren und koaxialen Kreises ist, der dem Aussendurchmesser eines bestimmungsgemäss in der Rohrschelle fixierten Rohres entspricht, oder der, im Falle des Ansatzstückes (2'), dem Aussendurchmesser der Schelle (2) entspricht.

7. Rohrschelle (1) nach einem der Ansprüche 1 bis 6,
**gekennzeichnet durch**
eine Schelle (2) mit radial und axial einwärts gekröpften Spannzargen (25).

8. Rohrschelle (1) nach einem der Ansprüche 2 bis 7,
**gekennzeichnet durch**
eine, bezogen auf die Radialebene der Schelle (2), sich nach radial aussen trichterförmig verjüngende Konfiguration des Randbereiches (11) des Durchbruchs (5; 5') der Schelle (2) oder des Ansatzstückes (2').

9. Rohrschelle (1) nach einem der Ansprüche 2 bis 8,
**gekennzeichnet durch**
eine im Elastomerkörper ausgebildete Entkopplungsringnut (17) zwischen der peripheren Aufnahmetasche (8) für das Koppelelement (9) der Schelle (2) und einem inneren mantelartigen Fortsatz der zentralen Aufnahmetasche (6) für das am Befestigungsmittel (3) ausgebildete Koppelelement (7) nach Art einer Manschette (14), die einen zylindrischen Abschnitt (15) des Befestigungsmittels (3) umspannt.

10. Verfahren zur Montage der Rohrschelle (1) mit den Merkmalen nach einem der Ansprüche 1 bis 9 an einer Tragkonstruktion, insbesondere an einer Wand oder Decke eines Gebäudes,
**dadurch gekennzeichnet,**
**dass** der Elastomerkörper (4) mit dem Befestigungsmittel (3), insbesondere bereits herstellerseitig, fest verbunden wird, dass dann dieser Verbund, bezogen auf die Radialebene der Schelle (2), von radial innen nach radial aussen durch einen Durchbruch (5) in oder an der Schelle (2) lose hindurchgeschoben, und dann das Befestigungsmittel (3) mit der Tragkonstruktion verankert wird, wobei, fakultativ vor oder nach dieser Verankerung, die Schelle (2) abschliessend entgegen der Einsteckrichtung des Befestigungsmittels (3) gegen ein Koppelelement (7) des Befestigungsmittels (3) gezogen wird, bis ein Koppelelement (9) der Schelle (2) in einer zugeordneten peripheren Aufnahmetasche (8) des Elastomerkörpers einknüpft.

11. Verfahren zur Montage der Rohrschelle (1) mit den Merkmalen nach einem der Ansprüche 1 bis 9 an einer Tragkonstruktion, insbesondere an einer Wand oder Decke eines Gebäudes,
**dadurch gekennzeichnet,**
**dass** der Elastomerkörper (4) mit dem Befestigungsmittel (3), bereits herstellerseitig, fest verbunden wird, dass dann dieser Verbund, bezogen auf die Radialebene der Schelle (2), von radial innen nach radial aussen durch einen Durchbruch (5') in einem Ansatzstück oder Schellenhalter (2') der Schelle (2) hindurch eingedrückt wird, bis ein Koppelelement des Schellenhalters (2') in einer zugeordneten peripheren Aufnahmetasche des Elastomerkörpers einknüpft, und dass dann abschliessend das Befestigungsmittel (3) mit der Tragkonstruktion verankert wird, wobei, fakultativ vor oder nach dieser Verankerung, der Schellenhalter oder das Ansatzstück (2') abschliessend mit der Schelle (2) fest verbunden werden, sei dies durch verriegeln, vernieten oder verschweissen.

## Claims

1. A pipe clamp (1) for the permanent fixing of pipelines, particularly for wall fixing or ceiling fixing of pipelines in buildings, comprising a tensionable clamp (2) engaging around the pipe for fixing, and with fixing means (3) for fixing the clamp (2) to a supporting structure, particularly to a wall or ceiling of a building, **characterised by** an elastomer body (4) which is so connected both to the fixing means (3) and to the clamp (2) that the fixing means and the clamp are always held spaced apart under the conditions of use in accordance with the regulations and are able to swing freely relatively to one another in all three spatial directions.

2. A pipe clamp (1) according to claim 1, **characterised by** a configuration of the elastomer body (4) after the style of a profiled disc with a central receiving pocket (6) formed on the elastomer body for a coupling element (7) formed on the fixing means (3) and with a peripheral receiving pocket (8) for a coupling element (9) so formed on the clamp (2) that the assembled elastomer body (4) covers an opening (5) in the clamp (2) or an opening (5') in an attachment (2') on the clamp (2) for the connection or passage of the fixing means (3).

3. A pipe clamp (1) according to claim 2, **characterised by** a fixing means (3) with a collared sleeve (3, 7) as a spacer, the collar (7) of which is received in the central receiving pocket (6) of the elastomer body (4) which, when the pipe clamp (1) is assembled, lies inside the clamp (2) or at least inside the attachment (2') fixed on the clamp (2), and the maximum diameter of which is larger than the maximum clearance of the opening (5; 5') in the clamp (2) or the attachment (2').

4. A pipe clamp (1) according to claim 3, **characterised in that** the collared sleeve (3, 7) is provided with an internal screwthread (19) to receive a screwbolt fixed in the supporting structure.

5. A pipe clamp (1) according to any one of claims 2 to 4, **characterised by** a maximum outside diameter of the elastomer body (4) at least twice the size of the maximum clearance (13) of the opening (5; 5') in or on the clamp (2), wherein the surface zone (21) of the elastomer body (4) supported on the inner surface of the clamp (2) is configured to be of complementary shape to the clamp inner surface (20) in the support zone.

6. A pipe clamp (1) according to any one of claims 2 to 5, **characterised by** a peripheral annular bead (22) formed on the elastomer body, said bead, with respect to the clamp (2), projecting radially into the clamp ring or, in the case of the attachment (2'), projecting towards the outer wall of the clamp (2), its radial innermost ring surface (23) lying in the radial plane of the clamp on a circle the radius of which is smaller than the radius of the co-planar and co-axial circle corresponding to the outside diameter of a pipe fixed in accordance with regulations in the pipe clamp or, in the case of the attachment (2'), corresponding to the outside diameter of the clamp (2).

7. A pipe clamp (1) according to any one of claims 1 to 6, **characterised by** a clamp (2) with radially and axially inwardly cranked tensioning borders (25).

8. A pipe clamp (1) according to any one of claims 2 to 7, **characterised by** a configuration of the edge zone (11) of the opening (5; 5') of the clamp (2) or of the attachment (2') which, with respect to the radial plane of the clamp (2), tapers radially outwards in the form of a funnel.

9. A pipe clamp (1) according to any one of claims 2 to 8, **characterised by** a decoupling annular groove (17) formed in the elastomer body between the peripheral receiving pocket (8) for the coupling element (9) of the clamp (2) and an inner jacket-like continuation of the central receiving pocket (6) for the coupling element (7) formed on the fixing means (3), said continuation being in the form of a cuff (14) which encloses a cylindrical portion (15) of the fixing means (3).

10. A method of mounting the pipe clamp (1) having the features according to any one of claims 1 to 9 on a supporting structure, particularly on a wall or ceiling of a building, **characterised in that** the elastomer body (4) is permanently connected to the fixing means (3), more particularly by the manufacturer, and **in that** with respect to the radial plane of the clamp (2) this combination is then pushed loosely radially outwards from radially within through an opening (5) in or on the clamp (2), and then the fixing means (3) is anchored to the supporting structure, while optionally before or after such anchoring the clamp (2) is finally pulled in opposition to the direction of insertion of the fixing means (3) against a coupling element (7) of the fixing means (3) until a coupling element (9) of the clamp (2) engages in an associated peripheral receiving pocket (8) of the elastomer body.

11. A method of mounting the pipe clamp (1) having the features according to any one of claims 1 to 9 on a supporting structure, particularly on a wall or ceiling of a building, **characterised in that** the elastomer body (4) is already permanently connected to the fixing means (3), by the manufacturer, and **in that** with respect to the radial plane of the clamp (2) said combination is then pushed radially outwards from radially within through an opening (5') in an attachment or clamp holder (2') of the clamp (2) until a coupling element of the clamp holder (2') engages in an associated peripheral receiving pocket of the elastomer body, and **in that** then finally the fixing means (3) is anchored to the supporting structure, while optionally before or after such anchoring the clamp holder or the attachment (2') are finally connected permanently to the clamp (2) either by interlocking, riveting or welding.

## Revendications

1. Collier de serrage (1) pour la fixation localement fixe de tuyauteries, en particulier pour la fixation au mur ou paroi ou la fixation en plafond de tuyauteries dans des bâtiments, avec un collier (2), susceptible d'être serré, entourant le tube à fixer, et avec des moyens de fixation (3) pour fixer le collier (2) sur une construction support, en particulier sur un mur ou plafond d'un bâtiment, **caractérisé par**
un corps en élastomère (3), relié tant au moyen de fixation (3) qu'également au collier (2), de manière que le moyen de fixation et le collier, dans les conditions d'utilisation nominales, soient toujours espacés l'un de l'autre, et soient maintenus avec une possibilité de vibration mutuelle libre dans la totalité des trois directions spatiales.

2. Collier de serrage (1) selon la revendication 1, **caractérisé par** une configuration du genre d'un disque profilé du corps en élastomère (4), avec une poche de logement (6) centrale, réalisée sur le corps en élastomère, pour un élément de couplage (7) réalisé sur le moyen de fixation (3), et avec une poche de logement (8) périphérique pour un élément de couplage (9) réalisée sur le collier (2), de manière que le corps en élastomère (4) monté recouvre une traversée (5) ménagée dans le collier (2) ou une traversée (5'), ménagée dans une pièce appendice (2') sur le collier (2), pour le raccordement ou le passage du moyen de fixation (3).

3. Collier de serrage (1) selon la revendication 2, **caractérisé par** un moyen de fixation (2) avec une douille à collerette (3, 7), faisant office de pièce d'espacement, dont la collerette (7) est logée dans la poche de logement (6) centrale du corps en élastomère (4), qui, lorsque le collier de serrage (1) est assemblé, est située à l'intérieur du collier (2), ou au moins à l'intérieur de la pièce appendice (2') fixée sur le collier (2), et dont le diamètre maximal est supérieur à la largeur libre maximale de la traversée (5; 5') dans le collier (2) ou dans la pièce appendice (2').

4. Collier de serrage (1) selon la revendication 3, **caractérisé en ce que** la douille à collerette douille à collerette (3, 7) est prévue avec un filetage intérieur (19), pour recevoir un boulon fileté, fixé dans la construction support.

5. Collier de serrage (1) selon l'une des revendications 2 à 4, **caractérisé par** un diamètre extérieur maximal du corps en élastomère (4), d'au moins le double de la largeur libre (13) maximale de la traversée (5; 5') dans ou sur le collier (2), la zone de surface (21), située sur la surface intérieure du collier (2), du corps en élastomère (4) étant conformée de façon à être de forme complémentaire à la surface intérieure de collier (20), dans la zone de pose.

6. Collier de serrage (1) selon l'une des revendications 2 à 5, **caractérisé par** un anneau formant bourrelet (22) périphérique, réalisé sur le corps en élastomère (4), anneau formant bourrelet qui, en se référant au collier (2) fait saillie radialement à l'intérieur de son anneau de collier ou, dans le cas de la pièce appendice (2'), fait saillie en direction de la paroi extérieure du collier (2), et se place alors, par sa face annulaire (23) radialement la plus intérieure dans le plan radial du collier, sur un cercle dont le rayon est inférieur au rayon du cercle coplanaire et coaxial qui correspond au diamètre extérieur d'un tube nominal fixé dans le collier de serrage (2) ou qui, dans le cas de la pièce appendice (2'), correspond au diamètre extérieur du collier (2).

7. Collier de serrage (1) selon l'une des revendications 1 à 6, **caractérisé par** un collier (2) ayant des pattes de serrage (25), coudées axialement vers l'intérieur.

8. Collier de serrage (1) selon l'une des revendications 2 à 7, **caractérisé par le fait que** la zone de bordure (11) de la traversée (5; 5') du collier (2) ou de la pièce appendice (2) est d'une configuration allant en s'effilant en forme d'entonnoir, en direction radiale de l'extérieur, si l'on se réfère au plan radial du collier (2).

9. Collier de serrage (1) selon l'une des revendications 2 à 8, **caractérisé par** une gorge annulaire de désaccouplement (17), réalisée dans le corps en élastomère, entre la poche de logement (8) périphérique prévue pour l'élément de couplage (2) du collier (2) et un prolongement intérieur, du genre d'une enveloppe, de la poche de logement (6) centrale pour l'élément de couplage (7) réalisé sur l'élément de fixation (3), à la façon d'une manchette (14), qui entoure et enserre un tronçon (15) cylindrique du moyen de fixation (3).

10. Procédé de montage du collier de serrage (1) présentant les caractéristiques selon l'une des revendications1 à 9, sur une construction support, en particulier sur un mur ou un plafond d'un bâtiment,
**caractérisé en ce que**
le corps en élastomère (4) est relié rigidement au moyen de fixation (3), en particulier déjà au stade du fabricant, **en ce que** cet assemblage, en se référant au plan radial du collier (2) est passé de façon lâche radialement de l'intérieur vers radialement l'extérieur, à travers une traversée (5) ménagée dans ou sur le collier (2), et ensuite le moyen de fixation (3) est ancré à la construction support, sachant que, de façon facultative, avant ou après cet ancrage, le collier (2) est enfin tiré, à l'encontre de la direction d'enfichage du moyen de fixation (3), contre un élément de couplage (7) du moyen de fixation (3), jusqu'à ce qu'un élément de couplage (9) du collier (2) s'imbrique dans une poche de logement (8) périphérique, associée, du corps en élastomère.

11. Procédé de montage du collier de serrage (1) présentant les caractéristiques selon l'une des revendications1 à 9, sur une construction support, en particulier sur un mur ou un plafond d'un bâtiment,
**caractérisé en ce que**
le corps en élastomère (4) est relié rigidement au moyen de fixation (3), déjà au stade du fabricant, **en ce que**, ensuite, cet assemblage, en se référant au plan radial du collier (2), est enfoncé radialement de l'intérieur vers radialement l'extérieur, à travers une traversée (5') ménagée dans une pièce appendice ou un support de collier (2') du collier (2), jusqu'à ce qu'un élément de couplage du support de collier (2') s'imbrique dans une poche de logement périphérique associée du corps en élastomère, et **en ce que**, ensuite et enfin, le moyen de fixation (3) est ancré à la construction support, sachant que, de façon facultative, avant ou après cet ancrage, le support de collier (2) ou la pièce appendice (2') est enfin relié au collier (2), que ce soit par verrouillage, rivetage ou soudage.
